# EUROPÄISCHE PATENTANMELDUNG

(11) **EP 1 928 075 A2**
(43) Veröffentlichungstag der Anmeldung: **04.06.2008**
(21) Anmeldenummer: 07022646.9
(22) Anmeldetag: 22.11.2007
(51) Int. Cl.: H02K 21/24, H02K 5/173

(54) **Bürstenlose elektrische Maschine**

(30) Priorität: 01.12.2006 DE 102006056745; 08.02.2007 DE 102007006270
(71) Anmelder: LuK Lamellen und Kupplungsbau Beteiligungs KG, 77815 Bühl (DE)
(72) Erfinder: Becht, Marco, 77815 Bühl (DE); Mán, Lászlo, 77833 Ottersweiler-Unzhurst (DE)

(57) **Zusammenfassung**

Die Erfindung betrifft die Lagerung und deren Herstellung einer als Scheibenläufermotor ausgebildeten bürstenlosen elektrischen Maschine, deren in einem mehrteiligen Gehäuse gelagerter Rotor aus einer Rotorwelle und einer auf dieser fixierter Permanentmagnetscheibe gebildet wird, bei der zur Erhöhung der Leistungsdichte des Magnetfeldes die Lagerung des Rotors mindestens unmittelbar im Bereich des Innendurchmessers der Permanentmagnetscheibe erfolgt und bei der die den Rotor bildende vormontierte Baugruppe sowohl die den späteren Luftspalt begrenzenden Oberflächen als auch die Lagerlaufbahnen in einer Aufspannung fertig bearbeitet werden.

## Beschreibung

Die Erfindung betrifft eine bürsten lose elektrische Maschine, die als Scheibenläufermotor ausgebildet ist, gemäß den Oberbegriffen der Ansprüche 1 und 12 sowie ein Verfahren zur Herstellung einer Lagerung nach dem Oberbegriff von Anspruch 31.

Ein derartiger Scheibenläufermotor, bei dem die Magnetpole von einer auf einer Welle angeordneten Magnetscheibe gebildet werden, die als Zwischenläufer zwischen zwei Statorhälften angeordnet ist, ist aus dem Stand der Technik bekannt. So zeigt die EP 1 612 913 A2 einen Scheibenläufermotor mit einer Dauermagneterregung und einer Ladewicklung. In Umfangsrichtung wechseln entgegengesetzt zueinander magnetisierte Magnetpole einander ab. Zwischen der Magnetscheibe und den Statorhälften ist beidseits der als Rotor ausgebildeten Magnetscheibe zur Ausführung einer Rotationsbewegung jeweils ein axial von einem Magnetfluss durchsetzter Luftspalt vorgesehen. Die Statorhälften haben einen weichmagnetischen Kern mit Nuten, die mit Wicklungsspulen umwickelt sind. Sowohl die Statorhälften als auch der Rotor sind im Bereich der Rotorwelle mir dem Gehäuse fest verbunden.

Aus der DE 39 01 295 C1 ist ebenfalls eine Lösung für einen Gleichstrom-Scheibenläufermotor entnehmbar. Bei dieser Lösung begrenzen die Magnetpole der Statorhälften mit ihren gegenüberliegenden Stirnseiten einen Spalt, in den der scheibenförmige Rotor mit seinem schmalen Querschnitt hineintaucht. Dieser ist über eine Hohlwelle mit der Antriebselle verbunden. Der zur Ausführung der Rotationsbewegung des Rotors benötigte Luftspalt wird hierbei durch die Länge der Hohlwelle und der an den Jochwänden des Gehäuses angebrachten Statorhälften bestimmt. Die Welle wird mittels beidseitig in den Jochwänden des Gehäuses angeordneten und an der Hohlwelle anliegenden Axiallagern gelagert

Für eine hohe Feldliniendichte und damit einer hohen Leistungsdichte einer elektrischen Maschine, in diesem Falle eines Scheibenläufermotors, ist ein möglichst kleiner Luftspalt zwischen als Scheibe ausgebildetem Rotor und Stator anzustreben. Die Größe des Luftspaltes wird größtenteils durch Toleranzen beeinflusst, die aus dem Lagersitz der Scheibe herrühren. So können beispielsweise radiale Lagersitztoleranzen zum Taumeln der Scheibe führen. Die Größe des Luftspaltes wird außerdem bestimmt durch die axiale Steifigkeit der Scheibe. Weiterhin führen die magnetischen Kräfte oder über die Rotorwelle von außen eingebrachte Querkräfte und Biegemomente zu elastischen Verformungen, insbesondere der Lager. Dadurch kommt es ebenfalls zu einer Schiefstellung der Scheibe, die bei der Auslegung des Luftspaltes zu berücksichtigen ist.

Daher besteht die Aufgabe der Erfindung darin, eine elektrische Maschine der eingangs genannten Art so auszuführen, dass die Leistungsdichte des Magnetfeldes erhöht wird und deren Herstellung kostengünstig ist.

Diese Aufgabe wird durch eine erfindungsgemäße elektrische Maschine mit den Merkmalen des Anspruchs 1 gelöst. Diese als Scheibenläufermotor ausgebildete elektrische Maschine weist einen in einem mehrteiligen Gehäuse gelagerten Rotor auf, der aus einer Rotorwelle mit einer auf dieser fixierten Permanentmagnetscheibe besteht. Die Stirnseiten der Permanentmagnetscheibe sind zur Erhöhung der Steifigkeit und der magnetischen Flußdichte mit Deckblechen versehen. Ebenfalls sind auf der Rotorwelle Statorhälften gelagert, die jeweils stirnseitig einen Luftspalt bildenden axialen Abstand zur Permanentmagnetscheibe aufweisen, der die Größe des Luftspaltes definiert. Durch die Lagerung des Rotors unmittelbar im Bereich des Innendurchmessers der Permanentmagnetscheibe ist es möglich, dass die Größe des Luftspaltes nicht durch eine Toleranzkette infolge mehrerer auf der Rotorwelle angeordneter Bauteilen beeinflusst wird. Ein vorgegebener Abstand zwischen Permanentmagnetscheibe und Statorhälften kann somit über die Lebensdauer des Rotors im Wesentlichen konstant gehalten werden.

In einer vorteilhaften Ausgestaltung der Erfindung wird das Gehäuse aus zwei kraft- oder formschlüssig miteinander verbundenen Gehäuseschalen gebildet, die mittels mindestens eines Befestigungselementes miteinander verbunden sind. Allerdings ist es zweckmäßiger, mehrere über den Umfang verteilte, lösbare oder unlösbare Befestigungselemente anzuordnen. Als Befestigungselemente können beispielsweise Schrauben, Niete oder dergleichen dienen. Ebenso ist auch eine Schweiß- oder Klebeverbindung möglich, wobei diese auch nur auf Teilbereiche beschränkt werden kann.

Zur Verringerung der Toleranzkette wird zur Lagerung der Permanentmagnetscheibe erfindungsgemäß wird auf eine Lagerschale verzichtet, indem deren Funktion an der entsprechenden Stelle von der jeweiligen Gehäuseschale übernommen wird. Dazu werden in diesem Bereich der Gehäuseschale Laufbahnen zur Aufnahme der Wälzkörper eingearbeitet. Somit haben die Gehäuseschalen außer einer Schutzfunktion für ein elektromagnetisches Paket, gleichzeitig die Funktion äußerer Lagerschalen.

In einer weiteren vorteilhaften Ausgestaltung der Erfindung sind beidseitig der Permanentmagnetscheibe auf der Rotorwelle Fixierhülsen, die in axialer Richtung aus einem hülsenförmigen Grundkörper und einem dazu rechtwinklig abgewinkelten Flansch gebildet werden, entgegengesetzt angeordnet so aufgebracht, dass sie mit ihren Flanschen auf die Permanentmagnetscheibe und damit den Rotor eine Druckkraft erzeugen. Um eine axiale Verschiebung des elektromagnetischen Pakets zu verhindern, ist das Ende eines hülsenförmigen Grundkörpers einer Fixierhülse auf der Rotorwelle durch einen Anschlag axial fixiert.

Besonders vorteilhaft ist es, dass auf dem Umfang jeder Fixierhülse Lagerlaufbahnen eingebracht sind, so dass sie als innere Lagerschale einer entsprechenden Lagerung fungieren.

In einer vorteilhaften Ausgestaltung der Erfindung wird die Wälzlagerung am Innendurchmesser beidseitig der Permanentmagnetscheibe jeweils durch ein zweireihiges Schrägkugellager ausgeführt. Zur Unterstützung der durch die Lagerung der Fixierhülsen auf die Permanentmagnetscheibe ausgeübten Vorspannkraft, verlaufen die Tangenten der Laufbahnen für die Wälzkörper der Schrägkugellager unter einem Neigungswinkel von vorzugsweise 45° in Richtung Permanentmagnetscheibe. Die Senkrechten auf diese Tangenten kreuzen sich dabei auf der Rotationsachse.

Die Aufgabe der Erfindung wird weiterhin durch eine bürstenlose elektrische Maschine mit den Merkmalen des Anspruchs 12 gelöst. Bei dieser erfolgt die Lagerung des Rotors sowohl am Innen- als auch am Außendurchmesser der Permanentmagnetscheibe.

In einer besonders vorteilhaften Ausgestaltung der Erfindung wird diese Lagerung in Form einer Wälzlagerung ausgeführt. Die Verwendung der gleichen Art der Lagerung führt zu einer kostenoptimierten Herstellung des Scheibenläufermotors.

In einer weiteren vorteilhaften Ausgestaltung der Erfindung wird die Permanentmagnetscheibe aus einem Grundkörper gebildet, auf dem mehrere über den Umfang verteilte Magnete angeordnet sind. Der Vorteil dieser Ausgestaltung liegt darin, dass der Grundkörper der Permanentmagnetscheibe aus nicht magnetisierbarem Material, wie beispielsweise Kunststoff, bestehen kann, wodurch eine kostengünstige Herstellung möglich ist, und nur bestimmte Bereiche des Grundkörpers mit Dauermagneten bestückt werden.

Zur Bildung der Lagerung des Rotors am Außenumfang de Permanentmagnetscheibe wird deren Außendurchmesser durch eine in den Umfang ihres Grundkörpers eingesetzte Lagerscheibe vergrößert, in die beidseitig zu ihrer Längsachse Lagerlaufbahnen eingearbeitet sind.

Zur Schmutzabdeckung wird das aus den Statorhälften und dem Rotor bestehende elektromagnetische Paket von einem Gehäuse umschlossen, das aus zwei miteinander verbindbaren Gehäuseschalen gebildet wird.

In vorteilhafter Ausgestaltung der Erfindung sind bei dieser Lösung zunächst beide Gehäuseschalen topfförmig gestaltet, wobei zur Erzielung einer Verbindung deren Außendurchmesser so aufeinander abgestimmt sind, dass diese ineinandersteckbar sind und sich in einem Bereich, dem Verbindungsbereich, überdecken. Dieser Verbindungsbereich kann dabei so gestaltet sein, dass die Verbindung der beiden Gehäuseschalen entweder lösbar aufgrund einer Verschraubung oder unlösbar durch Kleben, Schweißen etc. erfolgen kann. Die Art der gewählten Verbindung wird dabei bestimmt vom für die Gehäuseschalen eingesetzten Material und von der Montagefreundlichkeitsvorgabe.

Zur Kostenreduzierung ist es weiterhin vorteilhaft, die Enden der Gehäuseschalen mit Lagerlaufbahnen zu ersehen, so dass die Gehäuseschalen gleichzeitig als äußere Lagerschalen fungieren. Somit werden mit einer Gehäuseschale sowohl die äußeren Lagerschalen für die Lagerung am Innen- als auch für die Lagerung am Außendurchmesser der Permanentmagnetscheibe gebildet. Die erforderlichen inneren Lagerschalen für die Lagerung am Außenumfang werden durch die mit Lagerlaufbahnen versehene Lagerscheibe realisiert.

Die innere Lagerschale für die Lagerung am Innendurchmesser der Permanentmagnetscheibe wird in vorteilhafter Ausgestaltung der Erfindung dadurch gebildet, dass auf einer Seite der Permanentmagnetscheibe im Bereich deren Grundkörpers diese mit einer Lagerlaufbahn versehen und für die Lagerung auf der anderen Seite der Permanentmagnetscheibe die Lagerlaufbahn direkt in die Rotorwelle eingearbeitet ist. Allerdings können in die Rotorwelle auch zwei Lagerlaufbahnen entsprechend zueinander beabstandet eingearbeitet werden, wobei die Breite der Permanentmagnetscheibe mit ihren seitlichen Deckblechen den Mindestabstand vorgibt. Somit fungiert die Rotorwelle gleichzeitig als innere Lagerschale.

Weiterhin wird die Aufgabe der Erfindung durch ein Verfahren zur Herstellung der erfindungsgemäßen Lagerung des Scheibenläufers mit den Merkmalen des Anspruchs 34 gelöst. Dabei ist es besonders vorteilhaft, dass die Baugruppe Rotor, die sich aus den Bauteilen Rotorwelle mit darauf fixierter Permanentmagnetscheibe zusammensetzt, wobei die Permanentmagnetscheibe stirnseitig von Deckblechen geschützt wird, bereits vormontiert ist, und in einer Aufspannung die für die Lagerung zuständigen und den Luftspalt begrenzenden Oberflächen fertig bearbeitet werden. Für diesen Arbeitsgang werden die fertig montierten und mit Wicklungen versehenen Statorhälften in die jeweiligen Gehäusehälften gelegt und mit diesen form- und kraftschlüssig verbunden.

Durch diese Maßnahme wird die Toleranzkette der miteinander in Eingriff stehenden Bauteile minimiert, was zu einer möglichst konstanten Breite des Luftspaltes führt.

Weitere Vorteile und vorteilhafte Weiterbildungen der Erfindung sind Gegenstand der nachfolgenden Figuren sowie deren Beschreibungsteile.

Es zeigen:
- Figur 1: eine Schnittdarstellung eines Scheibenläufermotors mit einer Lagerung des Rotors am Innendurchmesser der Permanentmagnetscheibe,
- Figur 2: eine Schnittdarstellung eines erfindungsgemäßen Scheibenläufermotors mit einer Lagerung des Rotors sowohl am Innendurchmesser als auch am Außendurchmesser der Permanentmagnetscheibe.

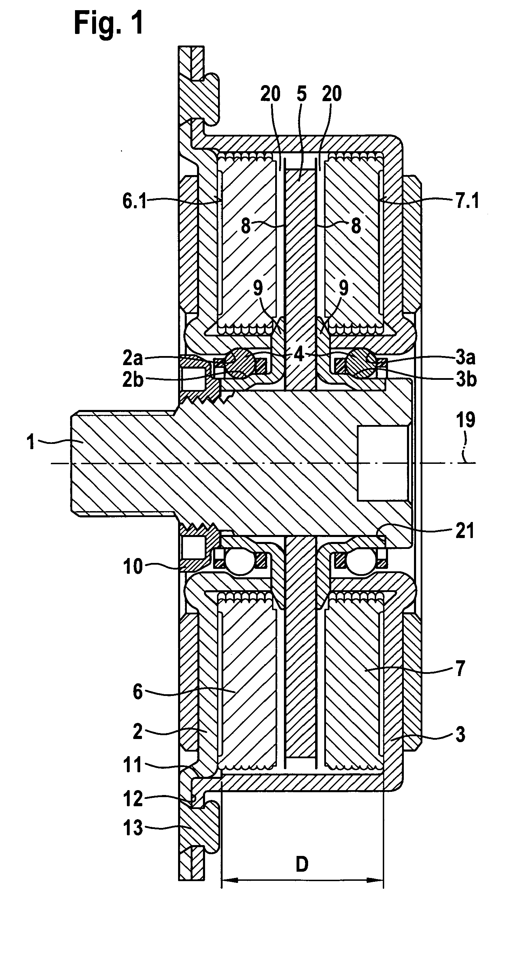

Figur 1 zeigt einen Scheibenläufermotor, bestehend aus einer auf einer Rotorwelle 1 fixierten Permanentmagnetscheibe 5, die von zwei Statorhälften 6 und 7 flankiert wird und einem Gehäuse, das aus zwei zusammengesetzten Gehäuseschalen 2 und 3 gebildet wird. Die Permanentmagnetscheibe 5 besteht aus einer Scheibe aus permanentmagnetischem Material, die zur Erhöhung der Steifigkeit und magnetischen Flussdichte jeweils an ihren Stirnseiten mit Deckblechen 8 versehen ist. Die Statorhälften 6 und 7 bestehen in bekannter Weise aus mehreren auf der Stirnseite einer Grundplatte angeordneten, umwickelten Eisenkernen.

Zur Momentenübertragung auf den Rotor sind beidseitig der Permanentmagnetscheibe 5 auf der Rotorwelle 1 Fixierhülsen 9 vorgesehen, die auf der Rotorwelle 1 fixiert sind. Diese Fixierhülsen 9 bestehen aus einem hülsenförmigen Grundkörper, der in radialer Richtung abgewinkelt ist und so einen Flansch bildet. Die Fixierhülsen 9 stehen mittels ihrer Flansche mit den Stirnflächen der Permanentmagnetscheibe 5 in Kontakt. Weiterhin sind diese Fixierhülsen 9 so ausgebildet, dass der Umfang des hülsenförmigen Grundkörpers mit Lagerlaufbahnen 2b und 3b versehen ist, so dass sie gleichzeitig die Funktion der jeweiligen Lagerschale übernehmen. Aus Figur 1 ist ersichtlich, dass auf der Rotorwelle 1 ein Anschlag 21 in Form eines Absatzes eingearbeitet ist, an dem das Ende der rechts an der Permanentmagnetscheibe 5 angeordneten Fixierhülse 9 anliegt. Der Rotor wird vormontiert, wobei diese Hülsen 9 im Bereich des Lagersitzes noch ein Übermaß haben. Nachfolgend kommt der Rotor in die Schleifmaschine und die Lagersitze werden fertig geschliffen. Das aus zwei Gehäuseschalen 2 und 3 gebildete Gehäuse ist so gestaltet, dass es außer als Schmutzabdeckung als äußere Lagerschale für die jeweils beidseitige Lagerung der Permanentmagnetscheibe 5 an deren Innendurchmesser fungieren. Aus diesem Grunde sind die in Richtung Rotationsachse 19 gerichteten Bereiche der Gehäuseschalen 2 und 3 jeweils rechtwinklig in Richtung Permanentmagnetscheibe 5 abgewinkelt. Mit diesem abgewinkelten Endbereich umhüllt die Gehäuseschale 2 den Innenumfang der Statorhälfte 6. In radialer Richtung, wo die Gehäuseschale 2 zumindest teilweise an der Stirnfläche 6.1 der Statorhälfte 6 anliegt, weist die im Wesentlichen kreisförmig ausgebildete Gehäuseschale 2 Ansätze bzw. Verlängerungen auf, die über die Größe des Außendurchmessers der Statorhälften 6 bzw. 7 hinausgehen, so dass in diese Befestigungselemente 13 für das Verbinden mit der Gehäuseschale 3 vorgesehen werden können.

Die Gehäuseschale 3 ist im Gegensatz zur Gehäuseschale 2 topfförmig gestaltet, wobei die Topfhöhe D der axialen Ausdehnung des elektromagnetischen Paketes entsprechend angepasst ist. Im Bereich der Rotorwelle 1 ist die Gehäuseschale 3 so abgewinkelt, dass sie den Innenumfang der Statorhälfte 7 umhüllt. Weiterhin liegt sie zumindest an Teilbereichen der Stirnfläche 7.1 der Statorhälfte 7 an. Der Rand des topfförmigen Grundkörpers der Gehäuseschale 3 ist ebenfalls wie die Gehäuseschale 2 derart in radialer Richtung verlängert, dass mittels Befestigungselementen 13 beide Gehäuseschalen 2 und 3 miteinander verbunden werden können. Über einen in der Gehäuseschale 2 vorgesehenen radialen Anschlag 11 und einen axialen Anschlag 12 werden beide Gehäuseschalen 2, 3 vor der Verbindung zunächst fixiert. Diese Verbindung kann beispielsweise über Schrauben oder Nieten realisiert werden. Außerdem kann die Verbindung auch unlösbar durch Kleben, Schweißen oder dergleichen erfolgen. Mit Hilfe einer auf der Rotorwelle 1 vorgesehenen Spanneinrichtung 10 können die Fixierhülsen 9 in axialer Richtung gegeneinander verspannt werden.

Zur Montage werden die Statorhälften 6 und 7 in die beispielsweise aus Stahlblech bestehende jeweilige Gehäusehälfte 2 und 3 gelegt. Der Rotor 5 mit den beidseitig angeordneten Fixierhülsen 9, der Rotorwelle 1 und den Deckblechen 8 wird zwischen die beiden Statorhälften 6 und 7 gelegt. Anschließend werden die Gehäusehälften 2 und 3 miteinander verbunden. Die verbleibenden Hohlräume können zur Erleichterung einer späteren Reinigung von Rückständen mit einer geeigneten Füllmasse ausgegossen werden. Die so vormontierten Baugruppen werden anschließend in jeweils einer Aufspannung spanend fertig bearbeitet. Bei diesem Vorgang werden die Lagerlaufbahnen 2b und 3b für Wälzkörper 4 eines Wälzlagers und die an den späteren Luftspalt 20 angrenzenden Stirnflächen 6.1 bzw. 7.1 der Statorhälften 6 und 7 auf ihr Endmaß geschliffen. Bei den als jeweils äußere Lagerschale dienenden Gehäuseschalen 2 und 3 werden in die als Lagerschale dienenden Bereiche die Lagerlaufbahnen 2a und 3a für die Wälzkörper 4 auf ihr Endmaß geschliffen. Nach der Reinigung der fertig bearbeiteten Bauteile erfolgt die Endmontage des Scheibenläufermotors, indem die in Käfigen fixierten Wälzkörper 4 in die Laufbahnen 2a, 2b bzw. 3a und 3b eingesetzt und die beiden Gehäuseschalen 2 und 3 miteinander verbunden werden. Bei diesem Zusammenbau werden die Gehäuseschalen 2 und 3 so zueinander fixiert, dass damit das Lagerspiel, bzw. eine Lagervorspannung eingestellt wird

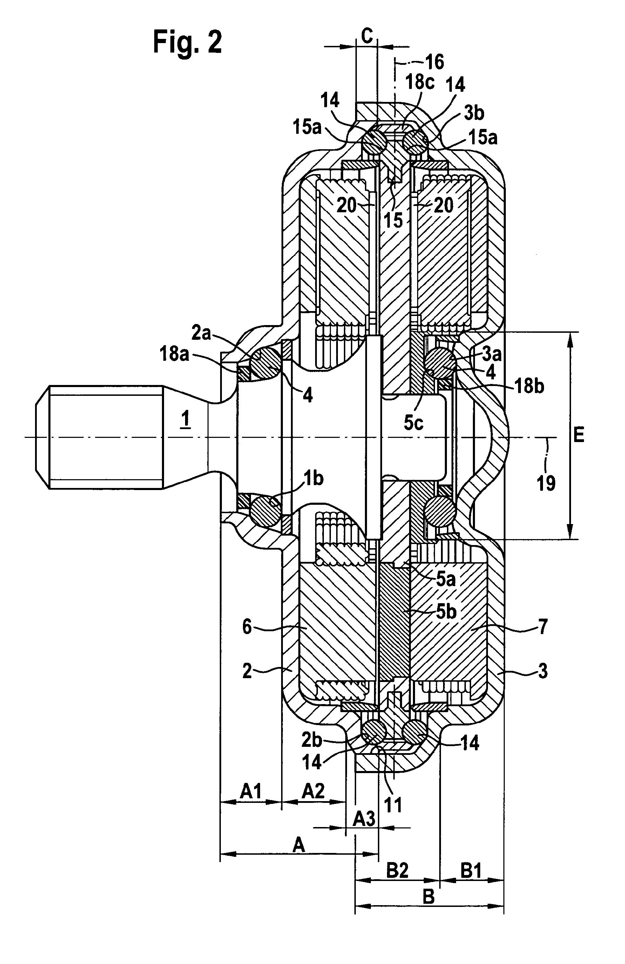

Elastische Bauteilverformungen, verursacht durch äußere auf die Rotorwelle 1 wirkende Kräfte, wirken sich ebenfalls auf den zu realisierenden Luftspalt 20 aus. Um diesen Verformungen entgegenzuwirken, wird in Figur 2 eine weitere mögliche Ausgestaltung der erfinderischen Lösung für die Lagerung des Rotors aufgezeigt. Diese erfolgt durch die Lagerung der Permanentmagnetscheibe an deren Innen- und Außendurchmesser.

Bei der nachfolgenden Beschreibung der Figur 2 werden die in Figur 1 verwendeten Bezugszeichen für gleiche Bauteile beibehalten. Ausgehend von den in Figur 1 für einen Scheibenläufermotor erforderlichen Bauteilen wird zur Realisierung einer zusätzlichen Lagerung am Außendurchmesser der Permanentmagnetscheibe 5, die aus einem scheibenförmigen Grundkörper 5a gebildet wird, auf dem mehrere über dem Umfang verteilte Magnete 5b angeordnet sind, diese durch Einsetzen einer mit einem größeren Durchmesser versehenen Lagerscheibe 15 entsprechend vergrößert. Der Außendurchmesser der Lagerscheibe 15 ist dabei so zu bemessen, dass in den über den Außendurchmesser der Permanentmagnetscheibe 5 hinausragenden Bereich beidseitig zur Längsachse 16 der Lagerscheibe 15 Lagerlaufbahnen 15a zur Führung von Wälzkörpern 14 eingearbeitet werden können. Somit dient diese Lagerscheibe 15 jeweils als innere Lagerschale eines Wälzlagers. An die Permanentmagnetscheibe 5 grenzen beidseitig Statorhälften 6 und 7 an. Im Unterschied zu Figur 1 besteht hierbei die Permanentmagnetscheibe 5 aus einem Grundkörper 5a, auf dem über den Umfang verteilt Permanentmagnete angeordnet sind. Der Grundkörper 5a besteht dabei aus nicht magnetisierbarem Material, wie beispielsweise Kunststoff. Wie aus der Figur 2 hervorgeht, ist im Bereich des Innendurchmessers der Permanentmagnetscheibe 5 eine Lagerlaufbahn 5c zur Aufnahme von Wälzkörpern 4 eingearbeitet. Die Lagerung des Rotors am Innendurchmesser der Permanentmagnetscheibe 5 erfolgt weiterhin dadurch, dass die Rotorwelle 1 mit einer Lagerlaufbahn 1 b versehen ist. In diesem Falle fungiert die Rotorwelle 1 in diesem Bereich als innere Lagerschale für ein Wälzlager.

Umschlossen werden alle Bauteile von einem Gehäuse, das sich wiederum aus zwei Gehäuseschalen 2 und 3 zusammensetzt. In diese Gehäuseschalen 2, 3 sind für die entsprechenden Lagerungen jeweils Lagerlaufbahnen 2a, 2b, 3a bzw. 3b eingearbeitet. Beide Lagerschalen 2 und 3 sind in dieser Ausführung so ausgelegt, dass sie in axialer Richtung einen Überdeckungsbereich C bilden, indem sie miteinander verbunden werden können. Diese Verbindung kann beispielsweise durch Kleben oder Schweißen hergestellt werden; allerdings ist auch eine lösbare Verbindung denkbar. Die Gehäuseschale 2 ist dabei so ausgebildet, dass sie mit ihrer axialen Ausdehnung A die in Käfigen 18a, 18b und 18c laufenden Wälzkörper 4, die Statorhälfte 6 und die Wälzkörper 14 aufnehmen kann. Da diese einzelnen Bauteile unterschiedliche Durchmesser aufweisen, ist die axiale Ausdehnung A stufenartig je nach Durchmesser in einen Teilbereich A1, einen Teilbereich A2 und einen Teilbereich A3 unterteilt. Der Teilbereich A1 bezeichnet den Teil der axialen Ausdehnung A, in dem in diesem als äußere Lagerschale fungierenden Bereich der Gehäuseschale 2 eine Lagerlaufbahn 2a eingeschliffen ist. Im Teilbereich A2 der Gehäuseschale 2 wird im Wesentlichen die Fläche der Statorhälfte 6 überdeckt. An den Teilbereich A2 schließt weiterhin stufenartig ein Teilbereich A3 an, der zur Aufnahme von Wälzkörpern 4 vorgesehen ist, indem in diesem Bereich die Lagerlaufbahn 2b eingeschliffen ist.

Die Höhe der Lagerschale 3 wird im Wesentlichen durch die axiale Ausdehnung B definiert, mit der die Statorhälfte 7 und der Lagerscheibe 15 eingeschlossen werden soll. Die axiale Ausdehnung B setzt sich aus gestuften Teilbereichen B1 und B2 zusammen. Im Teilbereich B1 wird die Statorhälfte 7 weitestgehend umschlossen, während mit der stufenartigen Ausbildung des Teilbereiches B2 die Lagerlaufbahn 3b zur Aufnahme der Wälzkörper 14 eingeschliffen ist.

Im Gegensatz zu Figur 1 ist der Boden der Lagerschale 3 geschlossen und im Bereich E mit einer Lagerlaufbahn 3a versehen.

Die Montage der Bauteile erfolgt analog wie in Figur 1 beschrieben.

Untersuchungen zur Verformung des Rotors durch äußere Kräfte ergaben, dass durch dessen Lagerung am Innen- und Außendurchmesser der Permanentmagnetscheibe 5 der realisierbare Luftspalt 20 gegenüber einer Lösung mit einer Lagerung ausschließlich am Innendurchmesser der Permanentmagnetscheibe 5 halbiert werden kann.

### Bezugszeichenliste

- 1: Rotorwelle
- 1 b: Lagerlaufbahn
- 2: Gehäuseschale / äußere Lagerschale für Wälzkörper
- 2a: Lagerlaufbahn
- 2b: Lagerlaufbahn
- 3: Gehäuseschale / äußere Lagerschale für Wälzkörper
- 3a: Lagerlaufbahn
- 3b: Lagerlaufbahn
- 4: Wälzkörper
- 5: Rotor
- 5a: Grundkörper
- 5b: Magnet
- 5c: Lagerlaufbahn
- 6: Statorhälfte 1
- 6.1: Stirnfläche Statorhälfte 1
- 7: Statorhälfte 2
- 7.1: Stirnfläche Statorhälfte 2
- 8: Deckblech
- 9: Fixierhülse / innere Lagerschale für Wälzkörper
- 10: axiale Verstelleinrichtung / Spannmutter
- 11: radialer Anschlag
- 12: axialer Anschlag
- 13: Befestigungselement
- 14: Wälzkörper
- 15: Lagerscheibe
- 15a: Lagerlaufbahnen
- 15b: Lagerlaufbahn
- 16: Längsachse
- 17: -
- 18: Käfig
- 19: Rotationsachse
- 20: Luftspalt
- 21: Anschlag
- A: axiale Ausdehnung Gehäuseschale 2
- A1: Teilbereich
- A2: Teilbereich
- B: axiale Ausdehnung Gehäuseschale 3
- B1: Teilbereich
- B2: Teilbereich
- C: Überdeckungsbereich
- D: Topfhöhe
- E: Lagerbereich

## Patentansprüche

1. Elektrische Maschine, die als Scheibenläufermotor ausgebildet ist, weist einen in einem mehrteiligen Gehäuse gelagerten Rotor auf, der aus einer Rotorwelle (1) mit einer auf dieser fixierten Permanentmagnetscheibe (5) besteht, deren Stirnseiten von Deckblechen (8) abgedeckt wird, die Permanentmagnetscheibe (5) zu ebenfalls auf der Rotorwelle (1) angeordneten Statorhälften (6, 7) jeweils stirnseitig einen Luftspalt (20) bildenden axialen Abstand aufweist und die Rotorwelle (1) jeweils mittels stirnseitig am Gehäuse vorgesehenen Wälzlagern gelagert ist, **dadurch gekennzeichnet, dass** die Lagerung des Rotors unmittelbar im Bereich des Innendurchmessers der Permanentmagnetscheibe (5) erfolgt.

2. Elektrische Maschine nach Anspruch 1, **dadurch gekennzeichnet, dass** das Gehäuse aus zwei kraft- oder formschlüssig miteinander verbundenen Gehäuseschalen (2) und (3) gebildet wird, wobei jede Gehäuseschale (2, 3) im Bereich des Innendurchmessers der Permanentmagnetscheibe (5) als äußere Lagerschale eines Wälzlagers ausgeführt ist.

3. Elektrische Maschine nach Anspruch 2, **dadurch gekennzeichnet, dass** die Gehäuseschalen (2) und (3) mittels mindestens einem Befestigungselement (13) miteinander verbunden sind.

4. Elektrische Maschine nach Anspruch 2, **dadurch gekennzeichnet, dass** ein zur Rotationsachse (19) abgewinkelter hülsenförmiger Bereich jeder Gehäuseschale (2, 3) mit einer Laufbahn (2a, 3a) zur Führung der Wälzkörper (4) versehen ist.

5. Elektrische Maschine nach Anspruch 1, **dadurch gekennzeichnet, dass** beidseitig der Permanentmagnetscheibe (5) auf der Rotorwelle (1) einander entgegengesetzt Fixierhülsen (9) angeordnet sind.

6. Elektrische Maschine nach Anspruch 5, **dadurch gekennzeichnet, dass** die Fixierhülse (9) in axialer Richtung aus einem hülsenförmigen Grundkörper und einem zu diesem rechtwinklig abgewinkelten Flansch gebildet wird.

7. Elektrische Maschine nach Anspruch 5 und 6, **dadurch gekennzeichnet, dass** der hülsenförmige Grundkörper jeder Fixierhülse (9) die innere Lagerschale eines Wälzlagers bildet.

8. Elektrische Maschine nach Anspruch 7, **dadurch gekennzeichnet, dass** die Mantelflächen des hülsenförmigen Grundkörpers Laufbahnen (2b, 3b) zur Führung von Wälzkörpern (4) eingearbeitet sind.

9. Elektrische Maschine nach Anspruch 6, **dadurch gekennzeichnet, dass** die Flansche der Fixierhülsen (9) mit der jeweiligen Stirnseite der Permanentmagnetscheibe (5) in Wirkverbindung stehen.

10. Elektrische Maschine nach Anspruch 5, **dadurch gekennzeichnet, dass** das Ende des hülsenförmigen Grundkörpers mindestens einer Fixierhülse (9) an einem auf oder in der Rotorwelle (1) vorgesehenen Anschlag (21) anliegt.

11. Elektrische Maschine nach den Ansprüchen 4 und 8, **dadurch gekennzeichnet, dass** die Tangenten der Laufbahnen (2a) und (2b) bzw. (3a) und ((3b) unter einem Winkel von vorzugsweise 45° in Richtung Permanentmagnetscheibe (5) hin geneigt verlaufen, und die Senkrechten auf diese Tangenten sich auf der Rotationsachse (19) kreuzen.

12. Elektrische Maschine, die als Scheibenläufermotor ausgebildet ist, weist einen in einem mehrteiligen Gehäuse gelagerten Rotor auf, der aus einer Rotorwelle (1) mit einer auf dieser fixierten Permanentmagnetscheibe (5) besteht, deren Stirnseiten von Deckblechen (8) abgedeckt wird, die Permanentmagnetscheibe (5) zu ebenfalls auf der Rotorwelle (1) angeordneten Statorhälften (6, 7) jeweils stirnseitig einen Luftspalt (20) bildenden axialen Abstand aufweist und die Rotorwelle (1) jeweils mittels stirnseitig am Gehäuse vorgesehenen Wälzlagern gelagert ist, **dadurch gekennzeichnet, dass** die Lagerung des Rotors (5) am Innen- und Außendurchmesser der Permanentmagnetscheibe (5) erfolgt.

13. Elektrische Maschine nach Anspruch 12, **dadurch gekennzeichnet, dass** die Lagerung des Rotors sowohl am Innen- als auch am Außendurchmesser der Permanentmagnetscheibe (5) in Form einer Wälzlagerung ausgeführt ist.

14. Elektrische Maschine nach Anspruch 12 und 13, **dadurch gekennzeichnet, dass** die Permanentmagnetscheibe (5) aus einem scheibenförmigen Grundkörper (5a) gebildet wird, auf dem mehrere über dem Umfang verteilte Magnete (5b) angeordnet sind.

15. Elektrische Maschine nach Anspruch 14, **dadurch gekennzeichnet, dass** der Außendurchmesser der Permanentmagnetscheibe (5) durch eine in den Umfang des Grundkörpers (5a) eingesetzte Lagerscheibe (15) vergrößert ist.

16. Elektrische Maschine nach Anspruch 12 und 15, **dadurch gekennzeichnet, dass** die Lagerscheibe (15) beidseitig zu ihrer Längsachse (16) Lagerlaufbahnen (15a) zur Führung von Wälzkörpern (14) aufweist.

17. Elektrische Maschine nach Anspruch 2, **dadurch gekennzeichnet, dass** beide Gehäuseschalen (2) und (3) topfförmig gestaltet sind, wobei sich an deren jeweilige radiale Ausdehnung eine Ausdehnung (A) bzw. (B) in axialer Richtung anschließt.

18. Elektrische Maschine nach Anspruch 17, **dadurch gekennzeichnet, dass** sich die axiale Ausdehnung (A) aus den Teilbereichen (A1), (A2) und (A3) und die axiale Ausdehnung (B) aus den Teilbereichen (B1) und (B2) zusammensetzt.

19. Elektrische Maschine nach Anspruch 18, **dadurch gekennzeichnet, dass** der Durchmesser der Gehäuseschalen (2) und (3) jeweils im Teilbereich (A2) bzw. (B1) im wesentlichen dem Durchmesser der Statorhälfte (6) bzw. (7) angepasst ist, und jeweils der Teilbereich (A2) über eine Stufe in den Teilbereich (A3) bzw. ebenso der Teilbereich (B1) über eine Stufe in den Teilbereich (B2) übergehen, dessen Durchmesser in diesem Bereich (A3, B2) dem Außendurchmesser der Lagerscheibe (15) angepasst ist.

20. Elektrische Maschine nach Anspruch 16 und 19, **dadurch gekennzeichnet, dass** die axiale Ausdehnung der Teilbereiche (A3) und (B2) so gestaltet ist, dass sie sich im Bereich (C), auf Grund der Anpassung des Innendurchmessers der Gehäuseschale (3) an den Außendurchmesser der Gehäuseschale (2), überdecken.

21. Elektrische Maschine nach Anspruch 17 und 20 **dadurch gekennzeichnet, dass** die Gehäuseschalen (2) und (3) im Bereich (C) miteinander unlösbar oder unlösbar verbunden sind.

22. Elektrische Maschine nach Anspruch 12 und 14, **dadurch gekennzeichnet, dass** für die Lagerung der Permanentmagnetscheibe (5) am Innendurchmesser des Grundkörpers (5a) eine Lagerlaufbahn (5c) zur Führung von Wälzkörpern (4) vorgesehen ist.

23. Elektrische Maschine nach den Ansprüchen 12, 17 und 22, **dadurch gekennzeichnet, dass** im Bereich der am Innendurchmesser der Permanentmagnetscheibe (5) vorgesehenen Lagerung die radiale Ausdehnung der Gehäuseschale (3) mit einer Lagerlaufbahn (3a) versehen ist.

24. Elektrische Maschine nach den Ansprüchen 12, 17 bis 19, **dadurch gekennzeichnet, dass** in die Gehäuseschale (2) im Bereich (A1) eine Lagerlaufbahn (2a) zur Führung von Wälzkörpern (4) eingebracht ist.

25. Elektrische Maschine nach Anspruch 12 und 24, **dadurch gekennzeichnet, dass** die Rotorwelle (1) mindestens einseitig der Permanentmagnetscheibe (5), im Bereich (A1) der Gehäuseschale (2), eine Lagerlaufbahn (1 b) aufweist.

26. Elektrische Maschine nach den Ansprüchen 12, 20 und 21, **dadurch gekennzeichnet, dass** die Gehäuseschale (2) im Teilbereich (A3) mit einer Lagerlaufbahn (2b) versehen ist.

27. Elektrische Maschine nach Anspruch 12, **dadurch gekennzeichnet, dass** sowohl die Gehäuseschale (2) als auch die Gehäuseschale (3) die äußere Lagerschale für die jeweiligen Wälzkörper (4) und (14) bildet.

28. Elektrische Maschine nach Anspruch 12 und 16, **dadurch gekennzeichnet, dass** die Lagerscheibe (15) die innere Lagerschale der jeweiligen Wälzkörper (14) bildet.

29. Elektrische Maschine nach Anspruch 12 und 25, **dadurch gekennzeichnet, dass** die Rotorwelle (1) im Bereich der Lagerlaufbahn (1 b) die innere Lagerschale für die Wälzkörper (4) bildet.

30. Elektrische Maschine nach Anspruch 12 und 22, **dadurch gekennzeichnet; dass** der Grundkörper (5a) im Bereich der Lagerlaufbahn (5c) die innere Lagerschale für die Wälzkörper (4) bildet.

31. Verfahren zur Herstellung einer Lagerung für eine als Scheibenläufermotor ausgebildeten elektrischen Maschine, deren Bauteile Rotorwelle (1), Permanentmagnetscheibe (5), die stirnseitig von Deckblechen (8) abgedeckt wird, als Baugruppe bereits vormontiert sind, **dadurch gekennzeichnet, dass** bei dieser Baugruppe die den späteren Luftspalt (20) begrenzenden Oberflächen und die Lagerlaufbahnen (2a, 2b, 3a, 3b) in einer Aufspannung fertig bearbeitet werden.
